# EUROPÄISCHE PATENTANMELDUNG

(11) **EP 4 668 167 A1**
(43) Veröffentlichungstag der Anmeldung: **24.12.2025**
(21) Anmeldenummer: 24183739.2
(22) Anmeldetag: 21.06.2024
(51) Int. Cl.: G06N 3/098

(54) **VERFAHREN UND SYSTEM ZUM BETRIEB EINES TECHNISCHEN GERÄTS**

(71) Anmelder: Siemens AG Österreich, 1210 Wien (AT)
(72) Erfinder: Schall, Daniel, 2020 Hollabrunn (AT)
(74) Vertreter: Siemens Patent Attorneys

(57) **Zusammenfassung**

Computer-implementiertes Verfahren zum Betrieb eines technischen Geräts durch ein System, wobei folgende Schritte ausgeführt werden:
a) Bereitstellen und Initialisieren eines Initial-Modells auf Basis künstlicher Intelligenz, und Speichern als globales Modell,
b) Übertragen des globalen Modells an den zumindest einen Klienten und Speichern als jeweiliges lokales Modell,
c) Trainieren des jeweiligen lokalen Modells mit bereitgestellten Trainings-Daten des jeweiligen Klienten, und Berechnen von ersten Gradienten über das Verhalten von Modellgewichten des jeweiligen lokalen Modells während des Trainings,
d) Berechnen von jeweiligen Wichtigkeits-Metriken des lokalen Modells basierend auf den ersten Gradienten durch den jeweiligen Klienten,
e) Übermitteln der Modell-Parameter des jeweiligen lokalen Modells mit den jeweiligen Wichtigkeits-Metriken, welche innerhalb eines vorgegebenen Wertebereichs liegen, vom jeweiligen Klienten an den Server,
f) Aggregieren der zuvor empfangenen Modell-Parameter der jeweiligen Klienten mit dem globalen Modell zu einem aggregierten Modell, und Entfernen jener Modell-Parameter im aggregierten Modell, für welche keine jeweiligen Wichtigkeits-Metriken vorliegen,
g) Speichern des aggregierten Modells als globales Modell,
h) Berechnen von zweiten Gradienten über das Verhalten von Modellgewichten des aggregierten Modells, und Prüfen, ob der zweite Gradient ein vorgegebenes Konvergenz-Kriterium erreicht haben, wenn nein, Fortsetzen mit Schritt b), sonst Fortsetzen mit Schritt i),
i) Betreiben des technischen Geräts mit dem lokalen Modell.

## Beschreibung

Die Erfindung betrifft ein computer-implementiertes Verfahren zum Betrieb eines technischen Geräts durch ein System, welches einen Server und zumindest einen Klienten mit einem jeweilig verbundenen technischen Gerät umfasst.

Die Erfindung betrifft ein System und ein Computer-Programmprodukt.

Ein Basis-, Grund- oder Gründungs-Modell (engl. "foundation model", kurz FM) ist ein Modell auf Basis künstlicher Intelligenz (kurz KI), das mit breiten Daten trainiert wird, so dass es auf eine Vielzahl von Anwendungsfällen angewendet werden kann.

Grund-Modelle haben die KI verändert und prominente Chatbots und generative KI unterstützt. Foundation-Modelle sind Allzwecktechnologien, die eine Vielzahl von Anwendungsfällen unterstützen können.

Die Erstellung von Grundlagenmodellen ist oft sehr ressourcenintensiv, wobei die teuersten Modelle Hunderte von Millionen Dollar kosten, um die zugrunde liegenden Daten und Berechnungen zu bezahlen.

Föderiertes Lernen (engl. "federated learning", kurz FL) erweist sich als praktikable Lösung, um große Datenmengen auf einfache Weise bereitzustellen, und es daher Grund-Modellen ermöglicht, reichhaltige Daten aus einem breiteren Spektrum von Quellen zu nutzen.

Dieser verbesserte Zugriff auf Daten führt zur Entwicklung genauerer und effizienterer Systeme, die besser auf die spezifischen Bedürfnisse und Präferenzen der Benutzer in verschiedenen Szenarien zugeschnitten sind.

Darüber hinaus wird durch die Integration von FL mit FM die Nutzung privater Daten rechenschaftspflichtiger und bietet Einzelpersonen die Möglichkeit, die Quellen ihrer Daten zu verfolgen.

Andererseits erfordert die Erzeugung von Grund-Modellen meist einen hohen Einsatz an Rechen-, Speicher- sowie Kommunikations-Kapazitäten.

Die Kommunikation großer Mengen von Modellparametern, beispielsweise bei großen Sprachmodellen wie "Large Language Model Meta Al", kurz "LLaMA", mit bis zu 70 Milliarden Parametern, kann auch in FM-FL-Szenarien in der Praxis ungeeignet sein.

Ferner ist die Frage nach Datenschutz bei der Nutzung von Daten, sowie die Inhaberschaft der zugrunde liegenden Daten nicht immer geklärt.

Im Stand der Technik beinhaltet eine Kommunikationsstrategie beim föderierten Lernen häufig den Austausch von Modellaktualisierungen zwischen einem zentralen Server und den teilnehmenden Geräten unter Wahrung der Privatsphäre und Minimierung der Datenübertragung.

Eine typische Kommunikationsstrategie beim föderierten Lernen ist beispielsweise:
1) Initialisierung: Der zentrale Server initialisiert ein globales Modell und teilnehmende Geräte (Klienten) laden das globale Modell herunter.
2) Modelltraining auf Geräten: Jedes Gerät trainiert das Modell lokal mit seinen eigenen Daten, und das lokale Training verwendet das heruntergeladene globale Modell als Ausgangspunkt.
3) Lokale Modellaktualisierungen: Nach dem lokalen Training berechnet jedes Gerät die Modellaktualisierungen, in der Regel in Form von Gradienten, basierend auf seinen lokalen Daten.
4) Aggregation auf dem zentralen Server: die Geräte laden ihre Modell-Aktualisierungen auf den zentralen Server hoch und der zentrale Server aggregiert diese Aktualisierungen, um ein verfeinertes globales Modell zu erhalten.
5) Modellverteilung: das aktualisierte globale Modell wird dann für die nächste Runde des lokalen Trainings an die Geräte zurückgesendet.
6) Iterationen: die Schritte 2 bis 5 werden iterativ für mehrere Runden wiederholt, bis das Modell konvergiert.

Die Herausforderung bei der Kommunikation beim föderierten Lernen mit Grund-Modellen ergeben sich aus der beträchtlichen Größe dieser Modelle, was zu hohem Datenübertragungsaufwand, Einschränkungen der Netzwerkbandbreite und erhöhter Kommunikationslatenz führt.

Es ist daher Aufgabe der Erfindung eine Lösung bereitzustellen, welche die Anforderungen an die Kommunikation bei der Anwendung von FL auf FM verbessert.

Die erfindungsgemäße Aufgabe wird gelöst durch ein computer-implementiertes Verfahren zum Betrieb eines technischen Geräts durch ein System, welches einen Server und zumindest einen Klienten mit einem jeweilig verbundenen technischen Gerät umfasst, wobei folgende Schritte ausgeführt werden:
a) Bereitstellen und Initialisieren eines Initial-Modells auf Basis künstlicher Intelligenz, und Speichern als globales Modell, durch den Server,
b) Übertragen des globalen Modells an den zumindest einen Klienten, und Speichern als jeweiliges lokales Modell,
c) Trainieren des jeweiligen lokalen Modells mit bereitgestellten Trainings-Daten des jeweiligen Klienten, und Berechnen von ersten Gradienten über das Verhalten von Modellgewichten des jeweiligen lokalen Modells während des Trainings,
d) Berechnen von jeweiligen Wichtigkeits-Metriken des lokalen Modells basierend auf den ersten Gradienten durch den jeweiligen Klienten,
e) Übermitteln der Modell-Parameter des jeweiligen lokalen Modells mit den jeweiligen Wichtigkeits-Metriken, welche innerhalb eines vorgegebenen Wertebereichs liegen, vom jeweiligen Klienten an den Server,
f) Aggregieren der zuvor empfangenen Modell-Parameter der jeweiligen Klienten mit dem globalen Modell zu einem aggregierten Modell, und Entfernen jener Modell-Parameter im aggregierten Modell, für welche keine jeweiligen Wichtigkeits-Metriken vorliegen, durch den Server,
g) Speichern des aggregierten Modells als globales Modell, durch den Server,
h) Berechnen von zweiten Gradienten über das Verhalten von Modellgewichten des aggregierten Modells, und Prüfen, ob der zweite Gradient ein vorgegebenes Konvergenz-Kriterium erreicht haben, wenn nein, Fortsetzen mit Schritt b), sonst Fortsetzen mit Schritt i), durch den Server,
i) Betreiben des technischen Geräts mit dem lokalen Modell, durch den jeweiligen Klienten.

Die Reduzierung der Kommunikationskosten in einem sehr großen Parameter-Modell, beispielsweise mit sieben Milliarden Parametern, hängt wie jedes spezifische Szenario von Faktoren wie der Modellarchitektur, der Verteilung der Trainingsdaten und dem Grad der erforderlichen Parameteraktualisierungen ab.

Strategien wie die Übertragung nur wichtiger Gewichte, Quantisierungs- und Komprimierungstechniken können dazu beitragen, den Kommunikationsaufwand zu minimieren.

Der Ansatz umfasst einen modifizierten FL-Algorithmus, bei dem jeder Klient die Gewichtungsbedeutung berechnet und nur wichtige Gewichtungen an den Server übermittelt.

Die Wichtigkeits- oder Wesentlichkeits-Werte oder -Metriken können anhand der L²-Norm, insbesondere für die Größe von Gradienten für jede Gewichtung berechnet werden.

Die euklidische Norm, Standardnorm oder L²-Norm ist eine in der Mathematik häufig verwendete Vektornorm.

Im zwei- und dreidimensionalen euklidischen Raum entspricht die euklidische Norm der anschaulichen Länge oder dem Betrag eines Vektors und kann mit dem Satz des Pythagoras berechnet werden.

Allgemeiner wird die euklidische Norm auch für reelle und komplexe Vektorräume beliebiger endlicher Dimension definiert und ist dann die vom Standardskalar-Produkt abgeleitete Norm.

Sie besitzt als eine von einem Skalarprodukt induzierte Norm neben den drei Normaxiomen eine Reihe weiterer Eigenschaften, wie die Gültigkeit der Cauchy-Schwarz-Ungleichung und der Parallelogramm-Gleichung, sowie eine Invarianz unter unitären Transformationen.

Für orthogonale Vektoren erfüllt die euklidische Norm selbst eine allgemeinere Form des Satzes des Pythagoras.

Von der euklidischen Norm werden Begriffe wie der euklidische Abstand und die euklidische Topologie abgeleitet, und kann auf unendlich dimensionale Vektorräume verallgemeinert werden, beispielsweise auf Folgenräume durch die ℓ²-Norm und auf Funktionenräume durch die L²-Norm.

Diese Bewertungen helfen dabei, die Bedeutung der einzelnen Gewichtungen für den Beitrag zu den Modellaktualisierungen zu bestimmen.

Nur Gewichtungen mit Wichtigkeitswerten über einem bestimmten Schwellenwert werden an den zentralen Server übermittelt, was den Kommunikationsaufwand reduziert, indem nur die relevanten Informationen übertragen werden.

Der Schwellenwertparameter in der Funktion "communicate_important_weights" steuert, welche Gewichte als wichtig angesehen werden. Die Anpassung dieses Schwellenwerts beeinflusst die Seltenheit der kommunizierten Gewichte.

Auf das lokale Training auf jedem Gerät folgt die Aggregation nur der wichtigen Gewichte auf dem zentralen Server, was dezentrale Modellaktualisierungen bei gleichzeitiger Konzentration auf wichtige Informationen ermöglicht.

Dieser FL-Algorithmus betont die selektive Kommunikation wichtiger Gewichte und bietet ein Gleichgewicht zwischen der Minimierung der Kommunikationskosten und der Erhaltung der Gesamtleistung des Modells.

Anpassungen von Hyperparametern, wie beispielsweise einem Schwellenwert für die Bestimmung der Wichtigkeit, können basierend auf spezifischen Anforderungen und Merkmalen der Problemdomäne vorgenommen werden.

Das Initial-Modell auf Basis künstlicher Intelligenz umfasst Gewichte und Strukturinformationen in Form eines neuronalen Netzes.

Der Server ist mit den jeweiligen Klienten mit einer Datenverbindung verbunden, um Modelle zu übertragen beziehungsweise auszutauschen.

Das Trainieren des jeweiligen lokalen Modells mit bereitgestellten Trainings-Daten des jeweiligen Klienten kann beispielsweise dadurch erfolgen, dass Sensordaten entsprechend gekennzeichnet sind und zulässige oder auch unzulässige Merkmale in den Sensordaten markieren.

Das Berechnen von ersten und/oder zweiten Gradienten über das Verhalten von Modellgewichten des jeweiligen lokalen Modells umfasst die Analyse von Veränderungen von einzelnen Modellgewichten über einen Beobachtungszeitraum oder über Trainings hinweg.

Das Berechnen von Wichtigkeits-Metriken des lokalen Modells basierend auf den ersten Gradienten kann beispielsweise dadurch erfolgen, dass Modellgewichte, die sich über das Training nicht oder nur wenig ändern, als nicht "Wichtig" eingestuft werden, was durch eine entsprechende Wichtigkeits-Metrik ausgedrückt werden kann.

Die Wichtigkeits-Metriken können dann darauf geprüft werden, ob sie innerhalb eines vorgegebenen Wertebereichs liegen.

Das Aggregieren der Modell-Parameter mit dem globalen Modell zu einem aggregierten Modell kann beispielsweise so erfolgen, dassdie "wichtigen" Modellgewichte in das globale Modell aufgenommen werden und entsprechende vorhergehende Werte des globalen Modells ersetzen.

Es können jene Modell-Parameter im aggregierten Modell entfernt werden, für welche keine jeweiligen Wichtigkeits-Metriken vorliegen.

Der erste beziehungsweise zweite Gradient kann konvergieren, das heißt sich einem Endwert annähern, wobei der Endwert ein Modellgewicht darstellen kann und mithilfe eines vorgegebenen Konvergenz-Kriteriums berechnet werden kann.

Das Betreiben des technischen Geräts mit dem lokalen Modell durch den jeweiligen Klienten kann derart erfolgen, dass beispielsweise Sensordaten für das Gerät eingelesen werden und mithilfe des Modells analysiert werden, um eine Prädiktion auf das zukünftige Verhalten durchzuführen.

Das Betreiben des technischen Geräts mit dem lokalen Modell durch den jeweiligen Klienten kann aber auch derart erfolgen, dass beispielsweise das Gerät individuell angesteuert wird, indem besondere Betriebszustände berücksichtigt werden.

In einer Weiterbildung der Erfindung ist es vorgesehen, dass im Schritt f) das aggregierte Modell weniger Modellgewichte als das globale Modell aufweist.

Durch die Reduktion der Modellgröße wird die Komplexität des Verfahrens hinsichtlich der benötigten Ressourcen reduziert.

In einer Weiterbildung der Erfindung ist es vorgesehen, dass bei der Aggregation im Schritt f) eine Mittelwertbildung der empfangenen Modell-Parameter der jeweiligen Klienten durchgeführt wird.

Dadurch wird die Modellgenauigkeit für eine allgemeine Anwendung verbessert.

Die erfindungsgemäße Aufgabe wird auch durch ein System zum Betrieb eines technischen Geräts gelöst, umfassend einen Server und zumindest einen Klienten mit einem jeweilig verbundenen technischen Gerät, wobei das System dazu eingerichtet ist, das erfindungsgemäße Verfahren auszuführen.

Die erfindungsgemäße Aufgabe wird auch gelöst durch ein Computer-Programm-Produkt mit darin gespeicherten maschinenlesbaren Anweisungen, die, wenn sie von dem erfindungsgemäßen System ausgeführt werden, dieses veranlassen, das erfindungsgemäße Verfahren auszuführen

In den folgenden Algorithmen und Figuren wird die Erfindung anhand eines Ausführungsbeispiels im Detail beschrieben. In den Algorithmen und Figuren zeigt
- Fig. 1: ein erstes Ausführungsbeispiel der Erfindung in Form eines Pseudo-Codes,
- Fig. 2: ein zweites Ausführungsbeispiel der Erfindung in Form eines Pseudo-Codes,
- Fig. 3: ein vereinfachtes Blockschaltbild für eine Vision-FM Segmentierung,
- Fig. 4: ein System zur Ausführung des erfindungsgemäßen Verfahrens.
- Fig. 5: ein Beispiel für ein Flussdiagramm für das erfindungsgemäße Verfahren.

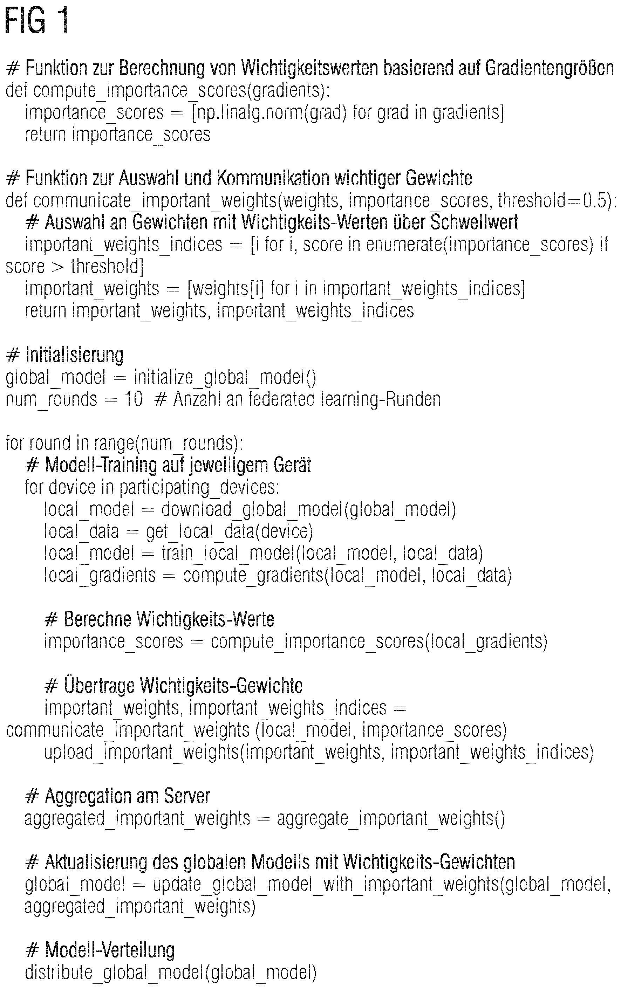

**Fig. 1** zeigt ein erstes Ausführungsbeispiel für einen Algorithmus gemäß der Erfindung in Form eines Pseudo-Codes,

In diesem Beispiel ist gezeigt, die auf einfache und effiziente Weise das erfindungsgemäße Verfahren implementiert werden kann.

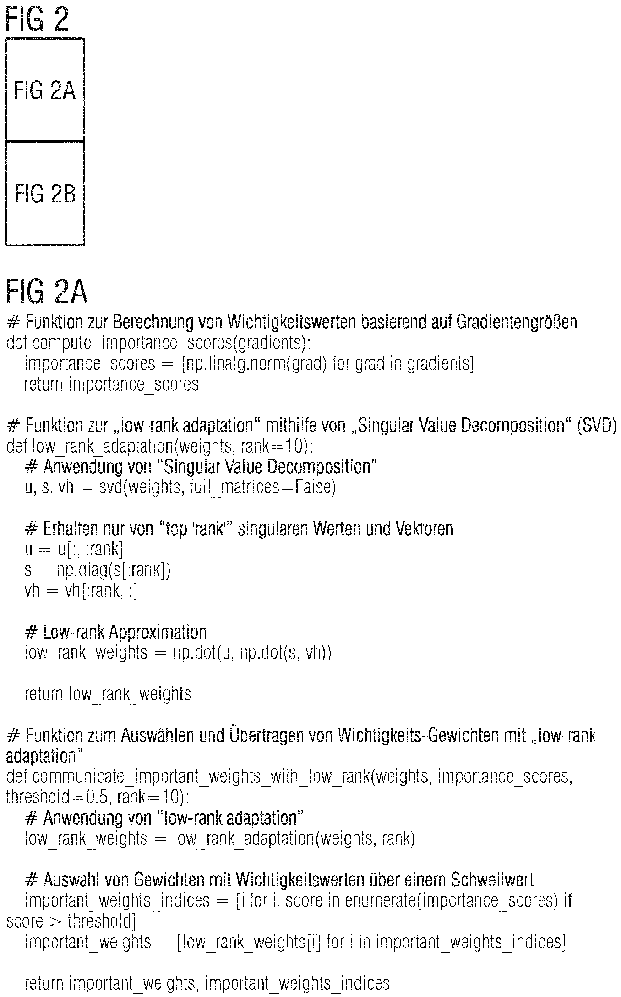

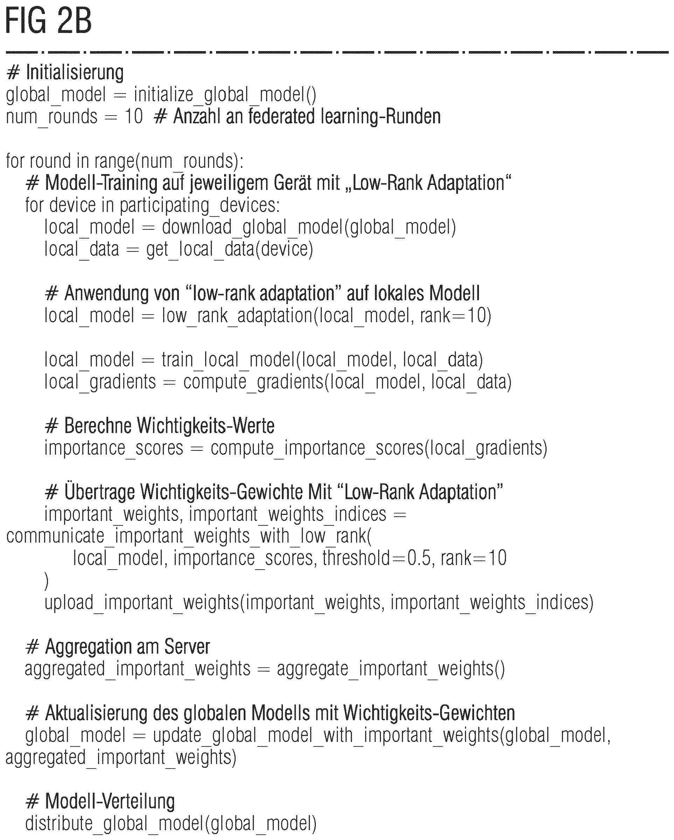

**Fig. 2** stellt ein zweites Ausführungsbeispiel für einen Algorithmus gemäß der Erfindung in Form eines Pseudo-Codes dar, wobei eine Verbesserung des Algorithmus durch Anwendung einer leistungsfähigeren FM durchgeführt wird.

Eine Erweiterung des vorhergehenden Algorithmus mithilfe der sogenannten "Low Rank Adaptation", kurz "LoRA", eine Tuning-Technik, welche die Leistungsfähigkeit fortschrittlicher FMs für benutzerdefinierte Aufgaben und Datensätze nutzt, um die System-Ressourcen weniger zu belasten oder übermäßige "Kosten", also die System-Komplexität zu verringern und zu verbessern.

Die Funktion "low_rank_adaptation" wendet die Singulärwertzerlegung (SVD) auf die Modellgewichtungen an und behält nur die singulären Werte und Vektoren des obersten "Rangs" bei, um eine Annäherung an den niedrigen Rang zu erhalten.

•Die Funktion "communicate_important_weights_with_low_rank" beinhaltet eine Low-Rank-Anpassung, bevor die wichtigen Gewichte ausgewählt und kommuniziert werden.

Der Rangparameter in der Funktion "low_rank_adaptation" steuert den gewünschten Rang der Annäherung mit niedrigem Rang.

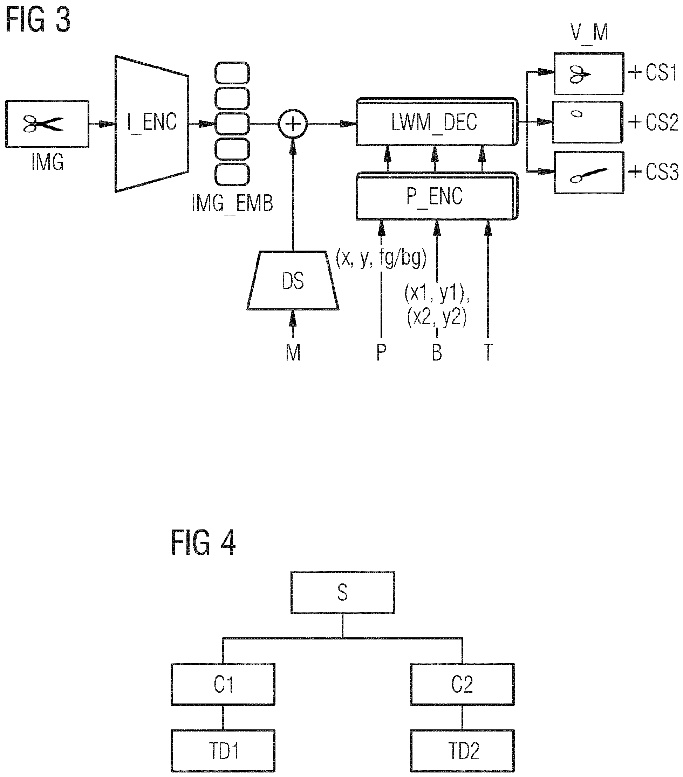

Fig. 3 zeigt ein vereinfachtes Blockschaltbild für eine Vision-FM Segmentierung, also eine Anwendung der FM FL-Strategie auf Vision-Transformatormodelle wie "Segment Anything" (SAM).

Der größte Teil des Modells ist der Bild-Encoder I_ENC, nämlich ein VIT-basierter Bild-Encoder ("Vision Transformer"), welcher die Bildeinbettungen IMG_EMB unter Verwendung der Aufmerksamkeit für Patches eines Bildes IMG berechnet.

Mithilfe einer Abtastung DS werden Masken M einem Leichtgewichts Masken-Decoder LWM_DEC zugeführt.

Der Leichtgewichts Masken-Decoder LWM_DEC wird über einen welcher über einen Prompt-Encoder P_ENC angesteuert, welcher mithilfe von Punkten P, Boxen B und Texten T konfiguriert wird.

Der Leichtgewichts Masken-Decoder LWM_DEC liefert gültige Masken V_M mit Vertrauenswerten CS1-CS3.

Es wird die relative positionelle Einbettung verwendet.

Dieser Ansatz kann verwendet werden, um den Bild-Encoder eines SAM-ähnlichen Modells zu trainieren oder zu verfeinern, um den Encoder beispielsweise speziell für industrielle Fehlererkennungsdaten fein zu justieren.

Fig. 4 zeigt ein Ausführungsbeispiel für ein System mit einem Server S, zwei Klienten C1, C2 und jeweils verbundenen Geräten TD1, TD2.

Das System ist dazu eingerichtet das erfindungsgemäße Verfahren auszuführen.

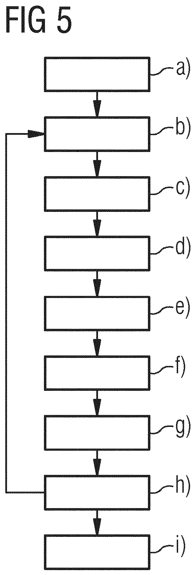

Fig. 5 zeigt ein Ausführungsbeispiel für ein Flussdiagramm des erfindungsgemäßen Verfahrens.

Das Verfahren zum Betrieb eines technischen Geräts durch das System ist zumindest teilweise Computer-implementiert.

Folgende Verfahrens-Schritte werden ausgeführt:
a) Bereitstellen und Initialisieren eines Initial-Modells auf Basis künstlicher Intelligenz, und Speichern als globales Modell, durch den Server S,
b) Übertragen des globalen Modells an den zumindest einen Klienten C1, C2, und Speichern als jeweiliges lokales Modell,
c) Trainieren des jeweiligen lokalen Modells mit bereitgestellten Trainings-Daten des jeweiligen Klienten C1, C2, und Berechnen von ersten Gradienten über das Verhalten von Modellgewichten des jeweiligen lokalen Modells während des Trainings,
d) Berechnen von jeweiligen Wichtigkeits-Metriken des lokalen Modells basierend auf den ersten Gradienten durch den jeweiligen Klienten C1, C2,
e) Übermitteln der Modell-Parameter des jeweiligen lokalen Modells mit den jeweiligen Wichtigkeits-Metriken, welche innerhalb eines vorgegebenen Wertebereichs liegen, vom jeweiligen Klienten C1, C2 an den Server S,
f) Aggregieren der zuvor empfangenen Modell-Parameter der jeweiligen Klienten C1, C2 mit dem globalen Modell zu einem aggregierten Modell, und Entfernen jener Modell-Parameter im aggregierten Modell, für welche keine jeweiligen Wichtigkeits-Metriken vorliegen, durch den Server S,
g) Speichern des aggregierten Modells als globales Modell, durch den Server S,
h) Berechnen von zweiten Gradienten über das Verhalten von Modellgewichten des aggregierten Modells, und Prüfen, ob der zweite Gradient ein vorgegebenes Konvergenz-Kriterium erreicht haben, wenn nein, Fortsetzen mit Schritt b, sonst Fortsetzen mit Schritt i, durch den Server S,
i) Betreiben des technischen Geräts TD1, TD2 mit dem lokalen Modell, durch den jeweiligen Klienten C1, C2.

In der ersten Trainings-Runde werden Trainingsdaten basierend auf dem Initial-Modell mit dessen Modell-Struktur angewendet, der ersten Modell-Struktur.

Das aggregierte Modell im Schritt f) weist weniger Modellgewichte als das globale Modell auf, ist also ein vereinfachtes, reduziertes Modell, wobei die Modell-Struktur geändert hat.

Daraus ergibt sich, dass die jeweiligen Trainingsdaten bei den Klienten ebenfalls an die neue Modell-Struktur, nämlich die zweite Modell-Struktur, angepasst werden müssen.

Die zweite Modell-Struktur kann sich nach jeder Trainings-Runde ändern.

Bei der Aggregation im Schritt f) wird optional eine Mittelwertbildung der empfangenen Modell-Parameter der jeweiligen Klienten C1, C2 durchgeführt wird.

*Unabhängig vom grammatikalischen Geschlecht eines bestimmten Begriffes sind Personen mit männlicher, weiblicher oder anderer Geschlechteridentität mit umfasst.*

### Bezugszeichenliste:

- B: Box
- C1, C2: Klient
- CS1-CS3: Vertrauenswert (engl. "confidence score")
- DS: Abtastung (engl. "down sample")
- I_ENC: Bild-Encoder
- IMG: Bild
- IMG_EMB: Bild-Einbettung (engl. "image embedding")
- LWM_DEC: Leichtgewichts Masken-Decoder (engl. "lightweight mask decoder")^
- M: Maske
- P: Punkt
- P_ENC: Prompt-Encoder (engl. "prompt encoder")
- S: Server
- T: Text
- TD1, TD2: technisches Gerät (engl. "technical device")
- V_M: gültige Masken (engl. "valid masks")

## Patentansprüche

1. Computer-implementiertes Verfahren zum Betrieb eines technischen Geräts durch ein System, welches einen Server (S) und zumindest einen Klienten (C1, C2) mit einem jeweilig verbundenen technischen Gerät (TD1, TD2) umfasst, wobei folgende Schritte ausgeführt werden:
a) Bereitstellen und Initialisieren eines Initial-Modells auf Basis künstlicher Intelligenz, und Speichern als globales Modell, durch den Server (S),
b) Übertragen des globalen Modells an den zumindest einen Klienten (C1, C2), und Speichern als jeweiliges lokales Modell,
c) Trainieren des jeweiligen lokalen Modells mit bereitgestellten Trainings-Daten des jeweiligen Klienten (C1, C2), und Berechnen von ersten Gradienten über das Verhalten von Modellgewichten des jeweiligen lokalen Modells während des Trainings,
d) Berechnen von jeweiligen Wichtigkeits-Metriken des lokalen Modells basierend auf den ersten Gradienten durch den jeweiligen Klienten (C1, C2),
e) Übermitteln der Modell-Parameter des jeweiligen lokalen Modells mit den jeweiligen Wichtigkeits-Metriken, welche innerhalb eines vorgegebenen Wertebereichs liegen, vom jeweiligen Klienten (C1, C2) an den Server (S),
f) Aggregieren der zuvor empfangenen Modell-Parameter der jeweiligen Klienten (C1, C2) mit dem globalen Modell zu einem aggregierten Modell, und Entfernen jener Modell-Parameter im aggregierten Modell, für welche keine jeweiligen Wichtigkeits-Metriken vorliegen, durch den Server (S),
g) Speichern des aggregierten Modells als globales Modell, durch den Server (S),
h) Berechnen von zweiten Gradienten über das Verhalten von Modellgewichten des aggregierten Modells, und Prüfen, ob der zweite Gradient ein vorgegebenes Konvergenz-Kriterium erreicht haben, wenn nein, Fortsetzen mit Schritt b), sonst Fortsetzen mit Schritt i), durch den Server (S),
i) Betreiben des technischen Geräts (TD1, TD2) mit dem lokalen Modell, durch den jeweiligen Klienten (C1, C2).

2. Verfahren nach dem vorhergehenden Anspruch, wobei im Schritt f) das aggregierte Modell weniger Modellgewichte als das globale Modell aufweist.

3. Verfahren nach einem der vorhergehenden Ansprüche, wobei bei der Aggregation im Schritt f) eine Mittelwertbildung der empfangenen Modell-Parameter der jeweiligen Klienten (C1, C2) durchgeführt wird.

4. System zum Betrieb eines technischen Geräts (TD1, TD2), umfassend einen Server (S) und zumindest einen Klienten (C1, C2) mit einem jeweilig verbundenen technischen Gerät (TD1, TD2), wobei das System dazu eingerichtet ist, das Verfahren nach einem der vorhergehenden Ansprüche auszuführen.

5. Computer-Programm-Produkt mit darin gespeicherten maschinenlesbaren Anweisungen, die, wenn sie von dem System nach einem der vorhergehenden Ansprüche ausgeführt werden, dieses veranlassen, das Verfahren nach einem der vorhergehenden Ansprüche auszuführen
